# EUROPÄISCHE PATENTSCHRIFT

(11) **EP 4 115 500 B1**
(45) Veröffentlichungstag und Bekanntmachung des Hinweises auf die Patenterteilung: **12.08.2026**
(21) Anmeldenummer: 21703666.4
(22) Anmeldetag: 04.02.2021
(51) Int. Cl.: H02K 5/04, H02K 5/20, H02K 5/22, H02K 7/116, H02K 9/19, H02K 11/33, H02K 5/06, B60K 11/00

(54) **SYSTEMGEHÄUSE FÜR EIN ANTRIEBSSYSTEM**
SYSTEM HOUSING FOR A DRIVE SYSTEM
BOÎTIER DE SYSTÈME POUR UN SYSTÈME D'ENTRAÎNEMENT

(30) Priorität: 04.03.2020 DE 102020202749
(43) Veröffentlichungstag der Anmeldung: 11.01.2023
(73) Patentinhaber: Robert Bosch GmbH, 70442 Stuttgart (DE)
(72) Erfinder: HEUSEL, Timo, 70839 Gerlingen (DE); DIETZ, Carsten, 71088 Holzgerlingen (DE); KRAEUTER, Janek, 71636 Ludwigsburg (DE)
(86) Internationale Anmeldenummer: PCT/EP2021/052632
(87) Internationale Veröffentlichungsnummer: WO 2021/175535

(56) Entgegenhaltungen:
- WO-A1-2018/087477
- WO-A1-2019/154154
- CN-A- 109 378 945
- DE-A1- 102010 008 584

## Beschreibung

Die Erfindung betrifft ein Gehäuse, insbesondere für ein elektrisches Antriebssystem für ein Fahrzeug, wobei das Gehäuse als Systemgehäuse ausgeführt ist und dafür vorgesehen ist, mehrere Systemkomponenten aufzunehmen und wobei das Gehäuse eine mit einem Gusswerkzeug hergestellte Gehäusewand aufweist und in oder an der Gehäusewand mehrere Schnittstellen zur Verbindung des Gehäuses mit außerhalb oder innerhalb des Gehäuses befindlichen Komponenten vorgesehen sind. Die Erfindung betrifft weiterhin Verwendung eines Gehäuses als Systemgehäuse für eine elektrische Antriebsachse eines Kraftfahrzeuges.

### Stand der Technik

In der Antriebstechnik müssen verschiedene Systemkomponenten, wie beispielsweise der eigentliche Antrieb oder Motor, ein oder mehrere Getriebe sowie die dazugehörige Steuerungs- und Regelungstechnik geschützt in einem Gehäuse untergebracht werden. Eine Möglichkeit einer solchen Unterbringung sind modulare Gehäuse, welche aus mehreren Einzelbauteilen bestehen, wobei jedes einzelne Bauteil eine Systemkomponente aufnimmt. Nachteilig an solchen modularen Gehäusen ist, dass die Verbindung der Einzelbauteile aufwendig ist. Darüber hinaus ist der Wärmeübergang zwischen den Einzelbauteilen durch Trennstellen behindert, was eine Wärmeübertragung von einer Systemkomponente auf eine andere bzw. den Abtransport der Wärme durch ein Kühlsystem behindert. Eine weitere Möglichkeit der Unterbringung verschiedener Systemkomponenten sind sogenannte Systemgehäuse, welche mehrere Systemkomponenten umschließen. Der Wärmeübergang zwischen den einzelnen Bereichen eines Systemgehäuses ist deutlich besser als bei modularen Gehäusen. Allerdings besteht bei bekannten Systemgehäusen immer noch ein hoher Aufwand für den Einbau der Systemkomponenten im Gehäuse sowie für die Verbindung des Systemgehäuses mit anderen, außerhalb angeordneten Komponenten.

DE 10 2013 021 745 A1 beschreibt einen Umrichtermotor, der ein Statorgehäuse aufweist. Der Umrichtermotor weist einen Kühlkanal mit zwei Anschlüssen für ein Kühlmedium auf. Das Statorgehäuse weist ferner einen plattenförmigen Abschnitt zum Tragen eines Umrichters auf, wobei der plattenförmige Abschnitt einstückig mit dem Statorgehäuse vorzugsweise als Gussteil ausgeführt ist.

DE 10 2013 217 890 A1 offenbart ein Elektromaschinengehäuse mit einem ersten Gehäuseteil zur Aufnahme eines Elekromaschinenstators und einem zweiten Gehäuseteil zur Aufnahme eines Leistungselektronikmoduls. Das erste Gehäuseteil umfasst weitere Abschnitte wie z.B. einen Abschnitt zur Aufnahme eines Getriebes. Für die Elektromaschine ist ein Kühlkanal mit zwei Anschlüssen vorgesehen, wobei der Kühlkanal im ersten Gehäuseteil verläuft. Bevorzugt bilden das erste Gehäuseteil und das zweite Gehäuseteil ein einstückiges Gehäuse.

DE 10 2012 016 208 A1 betrifft ein Gehäuse mit einem Kühlmantel für einen Elektromotor. Das Gehäuse umfasst dabei einen Kühlkanal mit zwei Anschlüssen zur Durchleitung eines Kühlmittels. Das Gehäuse umfasst ferner Abschnitte zur Aufnahme einer Leistungselektronik und eines Getriebes.

Weitere derartige Gehäuse sind aus der CN 109 378 945 A, aus der WO 2018/087 477 A1 und der DE 10 2010 008 584 A1 bekannt.

### Offenbarung der Erfindung

Es wird ein Gehäuse, insbesondere für ein elektrisches Antriebssystem für ein Fahrzeug vorgeschlagen, wobei das Gehäuse als Systemgehäuse ausgeführt ist und dafür vorgesehen ist, mehrere Systemkomponenten aufzunehmen. Das Gehäuse weist eine mit einem Gusswerkzeug hergestellte Gehäusewand auf, wobei in oder an der Gehäusewand mehrere Schnittstellen zur Verbindung des Gehäuses mit außerhalb oder innerhalb des Gehäuses befindlichen Komponenten vorgesehen sind. Die Schnittstellen umfassen zumindest einen Kühlmittelein- und/oder Kühlmittelauslass, zumindest einen Gehäusebefestigungspunkt für das Gehäuse an anderen Komponenten, insbesondere zur Befestigung des Gehäuses am Fahrzeug, zumindest einen Innenmantelanschluss zur Befestigung eines Innenmantels im Inneren des Gehäuses, zumindest einen Getriebeabdeckungsanschluss zur Befestigung einer Getriebeabdeckung und zumindest einen Elektronikabdeckungsanschluss zur Befestigung einer Abdeckung für eine Leistungselektronik. Ein erfindungsgemäßes Gehäuse ist als Systemgehäuse ausgeführt und besonders geeignet zur Aufnahme von mehreren Systemkomponenten eines elektrischen Antriebssystems für Fahrzeuge, auch E-Achse genannt. Ein erfindungsgemäßes Gehäuse kann jedoch auch in anderen technischen Bereichen, in denen mehrere Systemkomponenten benachbart zueinander angeordnet sind, beispielsweise im Bereich der Werkzeugmaschinen, verwendet werden. Ein erfindungsgemäßes Gehäuse weist eine Gehäusewand auf, welche im Gussverfahren hergestellt ist. Die Gehäusewand besteht dabei typischerweise aus metallischen Werkstoffen, beispielsweise aus Eisenbasislegierungen oder Aluminiumbasislegierungen. Eine Herstellung im Gussverfahren ermöglicht es, komplexe Geometrien der Gehäusewand in Massenproduktion kostengünstig herzustellen. Nach der Herstellung im Gussverfahren können optional Bereiche der Gehäusewand mit anderen Fertigungsverfahren nachbearbeitet werden, beispielsweise durch Fräsen, Bohren, Schleifen oder Ähnlichem. In oder an der Gehäusewand ist erfindungsgemäß eine Mehrzahl an Schnittstellen zur Verbindung des Gehäuses mit außerhalb oder innerhalb des Gehäuses befindlichen Komponenten vorgesehen: Zumindest ein Kühlmittelein- und/oder Kühlmittelauslass ist vorgesehen um einen einfachen Anschluss eines Kühlsystems an das Systemgehäuse zu ermöglichen. Kühlmittel wird zur Kühlung eines oder mehrerer der im Gehäuse anzuordnenden Systemkomponenten benötigt. Ein Kühlmittelein- oder Kühlmittelauslass wird üblicherweise durch eine Öffnung in der Gehäusewand gebildet, welche zusätzlich mit einem Flansch oder einem Gewinde versehen sein kann. Darüber hinaus kann die Schnittstelle Kühlmittelein- oder Kühlmittelauslass einen oder mehrere Bereiche zur Aufnahme einer Dichtung aufweisen. Weiterhin ist als Schnittstelle zumindest ein Gehäusebefestigungspunkt für das Gehäuse an anderen Komponenten vorgesehen. Einer oder mehrerer solcher Gehäusebefestigungspunkte dienen zur Befestigung des Gehäuses am Fahrzeug oder einer sonstigen übergeordneten Baugruppe. Ein solcher Gehäusebefestigungspunkt kann beispielsweise durch eine Anschlagfläche in Kombination mit einer Aufnahme für ein Verbindungselement, wie beispielsweise eine Schraube, ausgeführt sein. Alternativ kann ein Gehäusebefestigungspunkt auch als Steckverbindung oder Schnappverbindung ausgeführt sein. Ein Gehäusebefestigungspunkt dient generell der Befestigung, Positionierung und Fixierung des Gehäuses an anderen Baugruppen. Weiterhin ist als Schnittstelle zumindest ein Innenmantelanschluss zur Befestigung eines Innenmantels im Inneren des Gehäuses vorgesehen. Unter Innenmantel ist dabei ein zumindest bereichsweise parallel zur Gehäusewand angeordnetes Bauteil zu verstehen, welches im Inneren des Gehäuses befestigt wird. Nach der Anbringung eines solchen Innenmantels entsteht eine Kammer zwischen der Gehäusewand und dem Innenmantel, welche als Kanal für Kühlmittel genutzt werden kann. Durch die Anbringung eines Innenmantels entsteht eine zweiteilige Gehäusewand. Auf diese Weise können Kühlmittelkanäle, welche bei Integration in eine einteilige Gehäusewand schwierig herzustellende Hinterschneidungen darstellen würden, einfach durch Aufsetzen des Innenmantels realisiert werden. Ein solcher Innenmantel kann beispielsweise durch Fließpressen aus einem Metallwerkstoff hergestellt werden. Alternativ kann ein Innenmantel durch ein oder mehrere Bleche oder durch ein oder mehrere Kunststoffteile gebildet werden. Der Innenmantelanschluss stellt eine Schnittstelle zur Befestigung eines Innenmantels dar. Der Innenmantelanschluss kann dabei zum Beispiel als Anschlagfläche, aber auch als formschlüssige Schnittstelle, beispielsweise in Form einer Steckaufnahme ausgeführt sein. Weiter alternativ kann der Innenmantelanschluss als Klebe- oder Schweißfläche zur Anbringung des Innenmantels ausgeführt sein. Darüber hinaus weist ein erfindungsgemäßes Gehäuse als Schnittstelle zumindest einen Getriebeabdeckungsanschluss zur Befestigung einer Getriebeabdeckung auf. Üblicherweise ist ein erfindungsgemäßes Systemgehäuse unter anderem auch zur Aufnahme eines Getriebes vorgesehen. Zur Abdeckung des Getriebes ist ein Getriebedeckel erforderlich, welcher mit dem Gehäuse über zumindest einen Getriebeabdeckungsanschluss verbunden wird. Der Getriebeabdeckungsanschluss ist beispielsweise als ebene Anschlussfläche ausgeführt, in deren Nähe Aufnahmebereiche für Verbindungselemente, wie beispielsweise Schrauben, angeordnet sind. Der Getriebeabdeckungsanschluss kann auch eine oder mehrere Aufnahmen für Dichtelemente aufweisen. Der Getriebeabdeckungsanschluss kann eine größere Öffnung in der Gehäusewand umlaufen bzw. umschließen, durch welche zumindest ein Teil des Getriebes in das Systemgehäuse eingebracht werden kann. Schließlich umfasst ein erfindungsgemäßes Gehäuse als Schnittstelle zumindest einen Elektronikabdeckungsanschluss zur Befestigung einer Abdeckung für eine Leistungselektronik. Eine Leistungselektronik wird im Systemgehäuse meist abgetrennt von anderen Systemkomponenten untergebracht. Zur Einbringung der Leistungselektronik in das Gehäuse ist eine Öffnung vorgesehen, welche vor Inbetriebnahme durch eine Elektronikabdeckung verschlossen werden muss. Eine solche Elektronikabdeckung kann beispielsweise als Deckel ausgeführt sein. Der Elektronikabdeckungsanschluss ist diejenige Schnittstelle, mit welcher die Elektronikabdeckung verbunden wird. Der Elektronikabdeckungsanschluss kann analog zum Getriebeabdeckungsanschluss ausgeführt sein.

In einer Ausführungsform ist vorgesehen, dass die Schnittstellen weiterhin zumindest einen Fußpunkt zur Befestigung eines Elements am Gehäuse und/oder eine Gehäuseausprägung für ein Park-lock-System und/oder für ein Entkopplungselement und/oder zumindest eine Aggregatschnittstelle und/oder zumindest einen Steckerbefestigungspunkt zur Befestigung eines elektrischen Verbinders am Gehäuse und zumindest einen Anschraubpunkt für eine Zwischenwelle umfassen. Ein Gehäuse kann zusätzlich eine oder mehrere der zuvor genannten Schnittstellen aufweisen. Dabei können die verschiedenen Schnittstellen frei miteinander kombiniert werden. Eine solche weitere, optionale Schnittstelle ist ein Fußpunkt zur Befestigung eines Elementes am Gehäuse. Ein an einem solchen Fußpunkt anzubringendes Element kann beispielsweise ein Sensor, wie ein Temperatursensor sein. Der Fußpunkt ermöglicht die einfache Anbringung eines solchen Elementes, ohne dass weitere Zwischenbauteile erforderlich sind. Weiterhin kann das Gehäuse als Schnittstelle eine Gehäuseausprägung für ein Park-lock-System und/oder für ein Entkopplungselement aufweisen. Unter Gehäuseausprägung ist dabei ein nach außerhalb orientierter Bereich der Gehäusewand zu verstehen, in welchem Systemkomponenten angeordnet werden können. Eine Gehäuseausprägung stellt somit zusätzliches Innenvolumen im Gehäuse zur Verfügung. Innerhalb einer Gehäuseausprägung kann beispielsweise ein Park-lock-System angeordnet werden. Ein solches Park-lock-System ist eine Verriegelung für das Getriebe, welche aktiviert wird, sobald das Fahrzeug, mit dem ein Antriebssystem ausgestattet ist, geparkt wird. Durch diese Verriegelung wird das Getriebe gesperrt und das Fahrzeug kann nicht wegrollen. Alternativ kann in einer Gehäuseausprägung ein Entkopplungselement angeordnet werden. Ein solches Entkopplungselement kann zeitweise den Antrieb, beispielsweise eine elektrische Maschine, vom Getriebe trennen, beispielsweise um einen Freilauf zu ermöglichen. Ein solches Entkopplungselement kann auch als Disconnect bezeichnet werden. Weiterhin kann ein Gehäuse als Schnittstelle zumindest eine Aggregatschnittstelle aufweisen. An einer Aggregatsschnittstelle können nicht unmittelbar zum Antriebssystem gehörende Aggregate, wie beispielsweise ein Klimakompressor als Teil einer Klimaanlage eines Fahrzeugs, angeordnet werden. Durch das Vorsehen einer oder mehrerer solcher Aggregatsschnittstellen werden weitere Verbindungselemente zum Anschluss dieser Aggregate eingespart. Weiterhin oder alternativ kann ein Gehäuse als Schnittstelle einen Steckerbefestigungspunkt zur Befestigung eines elektrischen Verbinders am Gehäuse aufweisen. Ein solcher Steckerbefestigungspunkt dient zur fixierten Anordnung von elektrischen Verbindungselementen, welche beispielsweise für die Verkabelung der unterschiedlichen Systemkomponenten im Systemgehäuse miteinander benötigt werden. Durch einen Steckerbefestigungspunkt sind elektrische Bauteile in einfacher Weise und ohne den Bedarf von zusätzlichen Aufnahmen direkt an oder in der Gehäusewand befestigbar. Als weitere Schnittstelle kann zumindest ein Anschraubpunkt für eine Zwischenwelle vorgesehen sein. Eine Zwischenwelle dient der Ableitung von Drehmoment aus dem Systemgehäuse zu einem außerhalb angeordneten Getriebe, wie beispielsweise einem Differenzialgetriebe einer zusätzlichen Achse. Ein solcher Anschraubpunkt umfasst üblicherweise eine Öffnung zur Durchführung der Zwischenwelle sowie einen Befestigungsbereich, an dem eine Abdeckung oder Umhüllung der Zwischenwelle abgedichtet zum Systemgehäuse befestigt werden kann. Selbstverständlich können an einem Gehäuse weitere Schnittstellen zur Anordnung weiterer Komponenten an der Gehäusewand vorgesehen sein.

In einer weiteren Ausführungsform ist vorgesehen, dass die Schnittstellen in ihrer Art und Position am oder im Gehäuse an die Anforderungen des Anwenders des Gehäuses angepasst sind. Die Schnittstellen dienen der Verbindung des Gehäuses mit anderen Komponenten. Um eine optimale Integration des Gehäuses in andere Baugruppen, insbesondere in ein Fahrzeug, zu ermöglichen sind die Schnittstellen an die Anforderungen des Anwenders des Gehäuses angepasst, welche sich aus den anderen Komponenten der übergeordneten Baugruppen ergeben. Möchte der Anwender beispielsweise das Gehäuse in einem Fahrzeug anordnen, welches eine Klimaanlage und eine Parksperre aufweist, so werden die entsprechenden Schnittstellen, im genannten Beispiel eine Aggregatschnittstelle für einen Klimakompressor und eine Gehäuseausprägung für ein Park-lock-System an den Orten angeordnet, welche ein optimales Zusammenspiel mit anderen Komponenten des Fahrzeugs ermöglichen.

Weiterhin ist vorgesehen, dass das Gehäuse insbesondere die Gehäusewand zumindest einen Handlingpunkt aufweist, welcher als Greifpunkt bei der Bearbeitung des Gehäuses und/oder bei der Montage von Systemkomponenten im Gehäuse vorgesehen ist, wobei der Handlingpunkt an einer Position im Gehäuse angeordnet ist, die bei einer Anpassung der Schnittstellen in ihrer Art und Position am oder im Gehäuse nach den Anforderungen des Anwenders des Gehäuses unverändert bleibt. In dieser Ausführungsform ist zumindest ein Handlingpunkt am Gehäuse angeordnet. Dieser Handlingpunkt dient als Greifpunkt, an dem das Gehäuse oder die Gehäusewand bei der Montage gegriffen wird. Der Handlingpunkt kann bei automatischer Montage des Gehäuses beispielsweise von einem Greifarm eines Roboters gegriffen und aufgenommen werden. Ein solcher Handlingpunkt kann eine zylindrische Mantelfläche oder eine oder mehrere ebene Schlüsselflächen für eine gute Kraft- und Momentenübertragung bei der Montage aufweisen. Optional kann ein Handlingpunkt optisch kontrastreiche Bereiche aufweisen, welche eine Kameraerkennung des Handlingpunktes bei der automatischen Verarbeitung erleichtern. Ein Handlingpunkt kann beispielsweise als einfacher zylindrischer Zapfen ausgeführt sein, welcher an seiner Stirnfläche eine Einprägung aufweist, die optisch im Kontrast zu der übrigen Oberfläche des Zapfens ist. Um die Herstellung sowie die Verarbeitung eines Gehäuses zu erleichtern, wird die Position des Handlingpunktes so gewählt, dass diese Position auch bei Veränderungen an Art und Ort der Schnittstellen konstant bleibt. Ein oder mehrere Handlingpunkte, welche stets räumlich an der gleichen Position angeordnet sind, ermöglichen es, ein einziges Gusswerkzeug für die Herstellung verschiedener Arten von Gehäusen zu nutzen. An diesem Gusswerkzeug müssen zur Anpassung der Art und Position der Schnittstellen lediglich entsprechende Einsätze geändert werden, die Bereiche des Werkzeugs zur Herstellung der Handlingpunkte können jedoch unverändert bleiben. Dadurch werden die Werkzeugkosten bei der Anpassung eines Gehäuses deutlich reduziert. Weiterhin bringt eine gleichbleibende Positionierung der Handlingpunkte den Vorteil, dass vorhandene Montageeinrichtungen, wie Fertigungsstraßen, bezüglich des Greifens des Gehäuses nicht verändert werden müssen. Durch die konstante Anordnung der Handlingpunkte können die gleichen Greifwerkzeuge unter Durchführung gleicher oder sehr ähnlicher Bewegungen verwendet werden, was den Aufwand für die Montage des Gehäuses wesentlich reduziert.

In einer weiteren Ausführungsform ist vorgesehen, dass die Gehäusewand zwei- oder mehrteilig ausgeführt ist. In der einfachsten Ausführungsform ist die Gehäusewand einteilig ausgeführt, das bedeutet, sie wird als ein einziges Teil mithilfe eines Gusswerkzeuges hergestellt. Bei komplexeren Bauformen oder größeren Gehäusen kann die Gehäusewand auch zwei- oder mehrteilig ausgeführt sein. Die einzelnen Teile werden dann separat in einem oder verschiedenen Gusswerkzeugen hergestellt. Die Teile der Gehäusewand können später nebeneinander, zur Erzeugung einer einlagigen Gehäusewand zusammengefügt werden. Alternativ kann aus den Teilen auch eine zwei oder mehrlagige Gehäusewand gebildet werden, bei der zumindest bereichsweise die Teile der Gehäusewand parallel zueinander verlaufen.

Weiterhin ist vorgesehen, dass das Gehäuse mehrere Gehäusekammern aufweist, welche zur Aufnahme verschiedener Systemkomponenten, beispielsweise einer elektrischen Maschine, eines Getriebes und einer Leistungselektronik, vorgesehen sind. In dieser Ausführungsform ist das Innere des Gehäuses in mehrere Gehäusekammern unterteilt. Diese Gehäusekammern sind zur Aufnahme unterschiedlicher Systemkomponenten vorgesehen. Die Gehäusekammern sind voneinander zumindest bereichsweise, abgetrennt. Es können Übergänge oder Durchgänge zwischen den Gehäusekammern vorgesehen sein, beispielsweise um Verbindungen wie Steuerleitungen von einer Gehäusekammer zur Nächsten führen zu können. Einzelne oder mehrere Gehäusekammern können gegenüber den anderen Gehäusekammern jedoch auch abgedichtet werden. Eine derart abgedichtete Gehäusekammer ist beispielsweise geeignet zur Aufnahme eines Getriebes, welches durch ein flüssiges Schmiermittel geschmiert wird. Die Abdichtung verhindert in diesem Fall ein Eindringen des Schmiermittels in die anderen Gehäusekammern. Mehrere Gehäusekammern können bei der Herstellung des Gehäuses durch ein einziges Gusswerkzeug realisiert werden.

In einer Ausführungsform ist vorgesehen, dass die Gehäusewand aus einem wärmeleitfähigen Material gebildet ist, wodurch ein ungehinderter Wärmeübergang zwischen mehreren Gehäusekammern gewährleistet ist. Eine besonders gute thermische Leitfähigkeit weisen metallische Werkstoffe auf. In der Praxis haben sich Aluminiumbasiswerkstoffe als geeignete Werkstoffe für die Gehäusewand herausgestellt, da sie eine gute thermische Leitfähigkeit und eine hohe mechanische Festigkeit aufweisen.

In einer weiteren Ausführungsform ist vorgesehen, dass eine erste Gehäusekammer zur Aufnahme einer elektrischen Maschine vorgesehen ist, welche eine Axialrichtung aufweist, die parallel zur Rotorwelle der von der Gehäusekammer aufzunehmenden elektrischen Maschine ist und eine weitere Gehäusekammer zur Aufnahme einer Leistungselektronik vorgesehen ist, wobei die weitere Gehäusekammer in Axialrichtung der ersten Gehäusekammer angeordnet ist. In dieser Ausführungsform ist eine Gehäusekammer zur Aufnahme einer elektrischen Maschine vorgesehen, wobei diese Gehäusekammer eine Form aufweist, die der elektrischen Maschine angepasst ist. Die elektrische Maschine weist einen Rotor mit einer Rotorwelle auf. Die Richtung in der bei eingebauter elektrische Maschine die Rotationsachse der Rotorwelle verläuft, oder eine parallel dazu orientierte Richtung wird als Axialrichtung der Gehäusekammer bezeichnet. Eine weitere Gehäusekammer zur Aufnahme der Leistungselektronik ist in dieser Axialrichtung zu der Gehäusekammer angeordnet, die die elektrische Maschine aufnimmt. Eine derartige Anordnung kann auch als axialer Anbau der Gehäusekammer für die Leistungselektronik an die Gehäusekammer der elektrischen Maschine bezeichnet werden.

In einer alternativen Ausführungsform ist vorgesehen, dass eine Gehäusekammer zur Aufnahme einer elektrischen Maschine vorgesehen ist, welche eine Mantelfläche aufweist, die beabstandet um die Rotorwelle der von der Gehäusekammer aufzunehmenden elektrischen Maschine herum verläuft und eine weitere Gehäusekammer zur Aufnahme einer Leistungselektronik vorgesehen ist, wobei die Gehäusekammer an der Mantelfläche der Gehäusekammer angeordnet ist. In dieser Alternative zur zuvor beschriebenen Ausführungsform ist eine weitere Gehäusekammern vorgesehen, die an der Mantelfläche einer ersten Gehäusekammer angeordnet ist, wobei die erste Gehäusekammer zur Aufnahme der elektrische Maschine und die weitere Gehäusekammern zur Aufnahme der Leistungselektronik vorgesehen sind. Als Mantelfläche der Gehäusekammer für die elektrische Maschine wird diejenige Fläche bezeichnen, welche radial um die Rotorwelle, um Rotor und um Stator herum angeordnet ist. Die Mantelfläche ist eine zu den axial angeordneten Stirnflächen unterschiedliche Fläche. Eine Anordnung einer Gehäusekammer an der Mantelfläche einer Gehäusekammer, welche für die elektrische Maschine vorgesehen ist, kann auch als Mantelanbau bezeichnet werden. Die Anordnung unterschiedlicher Kammern im Gehäuse zueinander kann auf die konkrete Anwendung des Gehäuses individuell abgestimmt werden. Selbstverständlich können zusätzlich zu den zuvor beschriebenen beiden Gehäusekammern weitere Gehäusekammern für weitere Systemkomponenten vorgesehen werden.

Weiterhin wird die Verwendung eines Gehäuses nach einer der zuvor beschriebenen Ausführungsformen als Systemgehäuse für eine elektrische Antriebsachse eines Kraftfahrzeuges vorgeschlagen. Das Gehäuse ist besonders geeignet zur Aufnahme von Systemkomponenten, die zu einer elektrischen Antriebsachse eines Kraftfahrzeuges gehören. Solche Systemkomponenten sind beispielsweise der Antrieb, welcher von einer elektrischen Maschine gebildet wird, zumindest ein Getriebe sowie zumindest eine Leistungselektronik. Die Verwendung eines Gehäuses in der elektrischen Antriebstechnik ist besonders günstig, da bei der elektrischen Antriebstechnik verlässliche Lösungen durch einen einfachen Systemaufbau erforderlich sind. Darüber hinaus muss bei der elektrischen Antriebstechnik entstehende Abwärme von manchen Systemkomponenten zuverlässig abgeführt werden können, wofür das beschriebene Gehäuse aufgrund seiner sehr guten Wärmeleitfähigkeit besonders geeignet ist.

In einer Ausführungsform der Verwendung ist vorgesehen, dass die elektrische Antriebsachse ein Teil des Antriebes eines Hybridfahrzeuges oder eines reinen Elektrofahrzeuges ist. Die Verwendung eines Gehäuses nach einer der zuvor beschriebenen Ausführungsformen ist besonders vorteilhaft bei der Anordnung der elektrischen Antriebsachse in einem Hybridfahrzeug. Ein Hybridfahrzeug weist mehrere Antriebskomponenten auf, die miteinander kombiniert und synchronisiert werden müssen, wofür eine Vielzahl an Schnittstellen der Komponenten untereinander erforderlich ist. Ein Gehäuse nach einer der zuvor beschriebenen Ausführungsformen ist aufgrund seiner Mehrzahl an unterschiedlichen Schnittstellen optimal an die Anforderungen in einem Hybridfahrzeug anpassbar. Selbstverständlich kann ein Gehäuse auch in einem ausschließlich elektrisch angetriebenen Fahrzeug verwendet werden.

### Vorteile der Erfindung

Bei einem erfindungsgemäßen Gehäuse sind viele Funktionen in einem einzigen Systemgehäuse gebündelt. Im optimalen Fall sind an der Gehäusewand alle benötigten Schnittstellen zur Montage sowohl der sich im Gehäuse befindlichen Systemkomponenten als auch zur Montage des Gehäuses am Fahrzeug oder einer sonstigen übergeordneten Baugruppe vorgesehen. Ein erfindungsgemäßes Getriebe kann dann mit sehr geringem Aufwand und ohne Bedarf an komplexen Verbindungselementen montiert werden. Durch Variation der Art und Position der Schnittstellen kann das Gehäuse an verschiedene Anwendungen angepasst werden. Es wird zur Herstellung ein Gusswerkzeug vorgesehen, welches flexible Einsätze zur Gestaltung der unterschiedlichen Schnittstellen aufweist. Für eine Anpassung des Gehäuses an unterschiedliche Anforderungen müssen dann lediglich diese flexiblen Einsätze ausgetauscht werden, was die Werkzeugkosten bei der Herstellung unterschiedlich ausgeführter Gehäuse deutlich reduziert.

### Kurze Beschreibung der Zeichnungen

Eine Ausführungsform der Erfindung wird anhand der Zeichnung und der nachfolgenden Beschreibung näher erläutert.

Es zeigt:

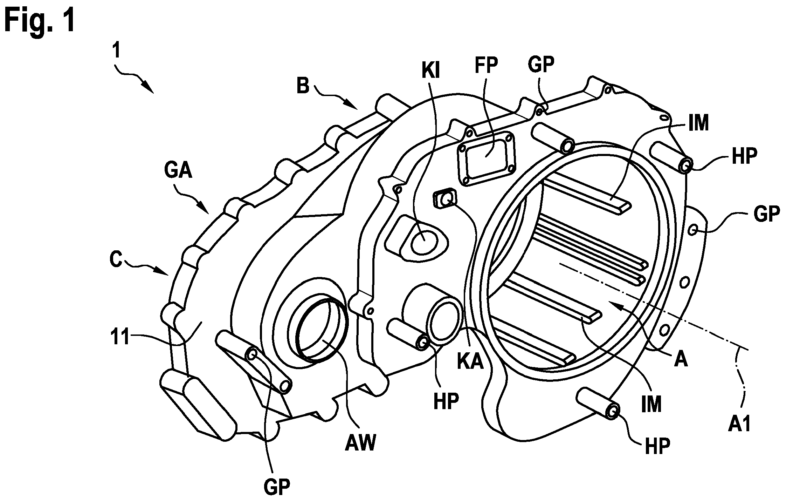

- Figur 1: eine schematische, perspektivische Ansicht eines Gehäuses nach einer Ausführungsform der Erfindung.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

Figur 1 zeigt eine schematische, perspektivische Ansicht eines Gehäuses 1 nach einer Ausführungsform der Erfindung. Das Gehäuse 1 ist schematisch ohne darin oder daran verbaute Systemkomponenten dargestellt. Das Gehäuse 1 basiert auf einer einteiligen Gehäusewand 11, welche im Gussverfahren hergestellt wurde. Die Gehäusewand 11 wurde, beispielsweise im Bereich einiger Schnittstellen, durch Fräsen, Bohren und Schleifen nachbearbeitet. Das dargestellte Gehäuse 1 umfasst drei Gehäusekammern A, B, C. Nach vorne rechts gewandt ist die Gehäusekammer A, welche zur Aufnahme einer elektrischen Maschine vorgesehen ist. Die Axialrichtung A1 der Gehäusekammer A ist durch eine gestrichelte Linie symbolisiert. In Axialrichtung A1 hinterhalb der Gehäusekammer A ist eine weitere Gehäusekammer B angeordnet, welche in der Ansicht in Fig. 1 von anderen Teilen des Gehäuses 1 verdeckt ist. Die Gehäusekammer B ist zur Aufnahme einer Leistungselektronik vorgesehen. In der dargestellten Ausführungsform ist somit ein axialer Anbau der Leistungselektronik zur elektrischen Maschine realisiert. Auf der in der Ansicht nach links gewandten Seite ist eine weitere Gehäusekammern C angeordnet, welche ebenfalls von der Gehäusewand 11 verdeckt ist. Die Gehäusekammer C ist zur Aufnahme eines Getriebes vorgesehen. Die Gehäusekammern A, B, C sind zumindest teilweise durch Trennwände voneinander abgetrennt. Das Gehäuse 1 bzw. die Gehäusewand 11 weist verschiedene Schnittstellen zur Verbindung mit außerhalb oder innerhalb des Gehäuses 1 befindlichen Komponenten auf. Exemplarisch sind drei Gehäusebefestigungspunkte GP eingezeichnet, welche für die Verbindung des Gehäuses 1 mit einer übergeordneten Baugruppe, beispielsweise einem Fahrzeug, vorgesehen sind. Die eingezeichneten Gehäusebefestigungspunkte GP sind in der Darstellung am rechten und am oberen Rand sowie auf der nach links vorne gewandten Seite der Gehäusewand 11 angeordnet. Alle Gehäusebefestigungspunkte GP umfassen hier eine plane Anschlagfläche sowie Aufnahmeöffnungen für Befestigungselemente, wie beispielsweise Schrauben. Selbstverständlich können an dem Gehäuse 1 weitere Gehäusebefestigungspunkte GP vorgesehen werden. Im oberen Bereich, etwa in der Mitte der Darstellung, sind nebeneinander angeordnet ein Kühlmitteleinlass KI und ein Kühlmittelauslass KA zu sehen. Diese beiden Schnittstellen sind dafür vorgesehen, Kühlmittel zur Kühlung von im Gehäuse 1 befindlichen Systemkomponenten ein- und auszuleiten. Kühlmitteleinlass KI und Kühlmittelauslass KA weisen hier jeweils Aufnahmen für Dichtelemente auf, die als Innenfase ausgeführt sind. Am oberen Rand, benachbart zum Kühlmittelauslass KA, ist ein Fußpunkt FP zur Befestigung eines Elements am Gehäuse 1 angeordnet. Dieser Fußpunkt FP ist eine Schnittstelle, welche durch aus Fräsen in der Gehäusewand 11 erzeugt wurde. An dem Fußpunkt FP kann beispielsweise ein Sensor angeordnet und befestigt werden, der die Temperatur des Gehäuses 1 bestimmt. Es können weitere Fußpunkt FP an anderen Stellen des Gehäuses 1 zur Anbringung weiterer Elemente vorgesehen werden. Im Inneren der Gehäusekammern A sind mehrere Innenmantelanschlüsse IM angeordnet. Diese Innenmantelanschlüsse IM sind als in den Innenraum vorstehende Rippen ausgebildet, welche radial nach innen weisende, plane Auflageflächen aufweisen. Die Innenmantelanschlüsse IM sind zur Anbringung eines Innenmantels im Inneren der Gehäusekammern A vorgesehen. Ein solcher Innenmantel ist erfindungsgemäß als Hohlzylinder ausgeführt, dessen Außenfläche mit den Innenmantelanschlüssen IM über eine Klebeverbindung verbunden wird. Nach Montage eines solchen Innenmantels entsteht ein Hohlraum zwischen dem Innenmantel und der Innenwand der Gehäusekammer A, welcher für eine Durchströmung mit Kühlmittel genutzt wird. Dadurch kann auf einfache Weise ein Kühlmantel in der Wand der zur Aufnahme einer elektrischen Maschine vorgesehenen Gehäusekammer A geschaffen werden. Nach links hinten gewandt, verdeckt von der Gehäusewand 11, ist umlaufend um die Gehäusekammern C ein Getriebeabdeckungsanschluss GA angeordnet. Dieser Getriebeabdeckungsanschluss GA stellt eine Schnittstelle zur Verbindung des Gehäuses 1 mit einer Getriebeabdeckung, beispielsweise einem Getriebedeckel dar. In der dargestellten Ausführungsform ist der Getriebeabdeckungsanschluss GA als plane Fläche ausgeführt, die die Gehäusekammer C umschließt. In regelmäßigen Abständen weist der Getriebeabdeckungsanschluss GA hier Gewindebohrungen auf, in welche Schrauben zur Befestigung der Getriebeabdeckung eingebracht werden können. Auf der nach vorne links gewandten Seite des Gehäuses 1 ist weiterhin ein einen Anschraubpunkt AW für eine Zwischenwelle angeordnet. Diese Schnittstelle erlaubt die Durchführung einer Zwischenwelle vom in der Gehäusekammern C angeordneten Getriebe nach außen. Der Anschraubpunkt AW umfasst eine zylindrische Durchgangsbohrung durch die Gehäusewand 11 sowie einen Befestigungsflansch, welcher die zylindrische Durchgangsbohrung umläuft.

Das Gehäuse 1 umfasst in der dargestellten Ausführungsform weiterhin mehrere Handlingpunkte HP, die hier als Zylinderstifte ausgeführt sind, welche über die Gehäusewand 11 hervorstehen. Alle dargestellten Handlingpunkte HP weisen in der Darstellung nach vorne rechts. Auf der Stirnfläche der Handlingpunkte HP ist jeweils eine Sacklochbohrung angeordnet, welche einen optischen Kontrast zur Stirnfläche darstellt. Die Handlingpunkte HP sind als Greifbereiche vorgesehen, an denen das Gehäuse 1 bei der Montage von Systemkomponenten oder am Fahrzeug gegriffen und fixiert werden kann. Die Form der Handlingpunkte HP erlaubt ein einfaches Greifen durch automatisierte Montagevorrichtungen, welche entsprechend geformte Greifer aufweisen. Durch den optischen Kontrast der Sacklochbohrung zur übrigen Stirnfläche der Handlingpunkte HP sind diese auch von einer Kamera automatisch gut erkennbar, was vorteilhaft bei einer vollautomatisierten Montage des Gehäuses 1 ist.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Gehäuse (1), insbesondere für ein elektrisches Antriebssystem für ein Fahrzeug, wobei das Gehäuse (1) als Systemgehäuse mit mehreren Gehäusekammern (A, B, C) ausgeführt ist und dafür vorgesehen ist, mehrere Systemkomponenten aufzunehmen und wobei das Gehäuse (1) eine mit einem Gusswerkzeug hergestellte Gehäusewand (11) aufweist und wobei in oder an der Gehäusewand (11) mehrere Schnittstellen zur Verbindung des Gehäuses (1) mit außerhalb oder innerhalb des Gehäuses (1) befindlichen Komponenten vorgesehen sind, wobei
die Schnittstellen zumindest einen Kühlmittelein- und/oder Kühlmittelauslass (Kl, KA), zumindest einen Gehäusebefestigungspunkt (GP) für das Gehäuse (1) an anderen Komponenten, insbesondere zur Befestigung des Gehäuses (1) am Fahrzeug, zumindest einen Innenmantelanschluss (IM) zur Befestigung eines Innenmantels in Gestalt eines Hohlzylinders, dessen Außenfläche mit den Innenmantelanschlüssen (IM) verbunden wird, wodurch ein Hohlraum zwischen dem Innenmantel und der Innenwand der ersten Gehäusekammer A entsteht, welche für eine Durchströmung mit Kühlmittel genutzt werden kann, im Inneren des Gehäuses (1), insbesondere der ersten Gehäusekammer (A), zumindest einen Getriebeabdeckungsanschluss (GA) zur Befestigung einer Getriebeabdeckung und zumindest einen Elektronikabdeckungsanschluss zur Befestigung einer Abdeckung für eine Leistungselektronik umfassen, **dadurch gekennzeichnet, dass** die Innenmantelanschlüsse (IM) als nach radial innen vorstehende Rippen ausgebildet sind, welche radial nach innen weisende, plane Auflageflächen aufweisen.

2. Gehäuse (1) nach Anspruch 1, **dadurch gekennzeichnet, dass** die Schnittstellen weiterhin zumindest einen Fußpunkt (FP) zur Befestigung eines Elements am Gehäuse (1) und/oder eine Gehäuseausprägung für ein Park-lock-System und/oder für ein Entkopplungselement und/oder zumindest eine Aggregatschnittstelle und/oder zumindest einen Steckerbefestigungspunkt zur Befestigung eines elektrischen Verbinders am Gehäuse (1) und zumindest einen Anschraubpunkt (AW) für eine Zwischenwelle umfassen.

3. Gehäuse (1) nach einem der vorhergehenden Ansprüche, **dadurch gekennzeichnet, dass** das Gehäuse (1) insbesondere die Gehäusewand (11) zumindest einen Handlingpunkt (HP) aufweist, welcher als Greifpunkt bei der Bearbeitung des Gehäuses (1) und/oder bei der Montage von Systemkomponenten im Gehäuse (1) vorgesehen ist, wobei der Handlingpunkt (HP) an einer Position im Gehäuse (1) angeordnet ist, die bei einer Anpassung der Schnittstellen in ihrer Art und Position am oder im Gehäuse (1) nach den Anforderungen des Anwenders des Gehäuses (1) unverändert bleibt.

4. Gehäuse (1) nach einem der vorhergehenden Ansprüche, **dadurch gekennzeichnet, dass** die Gehäusewand (11) zwei- oder mehrteilig ausgeführt ist.

5. Gehäuse (1) nach einem der vorhergehenden Ansprüche, **dadurch gekennzeichnet, dass** das Gehäuse (1) mehrere Gehäusekammern (A, B, C) aufweist, welche zur Aufnahme verschiedener Systemkomponenten, beispielsweise einer elektrischen Maschine, eines Getriebes und einer Leistungselektronik, vorgesehen sind.

6. Gehäuse (1) nach Anspruch 5, **dadurch gekennzeichnet, dass** die Gehäusewand (11) aus einem wärmeleitfähigen Material gebildet ist, wodurch ein ungehinderter Wärmeübergang zwischen mehreren Gehäusekammern (A, B, C) gewährleistet ist.

7. Gehäuse (1) nach Anspruch 5, **dadurch gekennzeichnet, dass** eine erste Gehäusekammer (A) zur Aufnahme einer elektrischen Maschine vorgesehen ist, welche eine Axialrichtung (A1) aufweist, die parallel zur Rotorwelle der von der ersten Gehäusekammer (A) aufzunehmenden elektrischen Maschine ist und eine weitere, zweite Gehäusekammer (B) zur Aufnahme einer Leistungselektronik vorgesehen ist, wobei die zweite Gehäusekammer (B) in Axialrichtung (A1) der ersten Gehäusekammer (A) angeordnet ist.

8. Gehäuse (1) nach Anspruch 5, **dadurch gekennzeichnet, dass** die erste Gehäusekammer (A) zur Aufnahme einer elektrischen Maschine vorgesehen ist, welche eine Mantelfläche aufweist, die beabstandet um die Rotorwelle der von der ersten Gehäusekammer (A) aufzunehmenden elektrischen Maschine herum verläuft und die weitere, zweite Gehäusekammer (B) zur Aufnahme einer Leistungselektronik vorgesehen ist, wobei die zweite Gehäusekammer (B) an der Mantelfläche der ersten Gehäusekammer (A) angeordnet ist.

9. Verwendung eines Gehäuses (1) nach einem der vorhergehenden Ansprüche als Systemgehäuse für eine elektrische Antriebsachse eines Kraftfahrzeuges.

10. Verwendung nach Anspruch 9, **dadurch gekennzeichnet, dass** die elektrische Antriebsachse ein Teil des Antriebes eines Hybridfahrzeuges oder eines reinen Elektrofahrzeuges ist.

## Claims

1. Housing (1), in particular for an electric drive system for a vehicle, wherein the housing (1) is designed as a system housing with a plurality of housing chambers (A, B, C) and is provided for receiving a plurality of system components, and wherein the housing (1) has a housing wall (11) prepared by way of a casting mould, and wherein a plurality of interfaces for connecting the housing (1) to components located outside or inside the housing (1) are provided in or on the housing wall (11), wherein
the interfaces comprise at least one coolant inlet and/or coolant outlet (KI, KA); at least one housing fastening point (GP) for the housing (1) to other components, in particular for fastening the housing (1) to the vehicle; at least one inner jacket connection (IM) for fastening an inner jacket in the form of a hollow cylinder, the outer surface of which is connected to the inner jacket connections (IM), whereby a cavity is created between the inner jacket and the inner wall of the first housing chamber A, which cavity can be used for throughflow with coolant, in the interior of the housing (1), in particular the first housing chamber (A); at least one transmission cover connection (GA) for fastening a transmission cover and at least one electronics cover connection for fastening a cover for an electronic power system, **characterized in that** the inner jacket connections (IM) are formed as radially inwardly projecting ribs, which have radially inwardly facing, flat contact surfaces.

2. Housing (1) according to Claim 1, **characterized in that** the interfaces further comprise at least one base point (FP) for fastening an element to the housing (1); and/or a housing shape for a parking lock system and/or for a decoupling element; and/or at least one unit interface; and/or at least one plug fastening point for fastening an electrical connector to the housing (1); and at least one screw attachment point (AW) for an intermediate shaft.

3. Housing (1) according to either of the preceding claims, **characterized in that** the housing (1), in particular the housing wall (11), has at least one handling point (HP), which is provided in the housing (1) as a gripping point during the machining of the housing (1) and/or during the assembly of system components, wherein the handling point (HP) is arranged at a position in the housing (1), which remains unchanged when the interfaces are adapted in their type and position on or in the housing (1) according to the requirements of the user of the housing (1).

4. Housing (1) according to any one of the preceding claims, **characterized in that** the housing wall (11) is designed in two or more parts.

5. Housing (1) according to any one of the preceding claims, **characterized in that** the housing (1) has a plurality of housing chambers (A, B, C), which are provided for receiving various system components, for example an electric machine, a transmission and an electronic power system.

6. Housing (1) according to Claim 5, **characterized in that** the housing wall (11) is formed from a thermally conductive material, whereby an unhindered heat transfer between a plurality of housing chambers (A, B, C) is ensured.

7. Housing (1) according to Claim 5, **characterized in that** a first housing chamber (A) is provided for receiving an electric machine, which has an axial direction (A1), which is parallel to the rotor shaft of the electric machine to be received by the first housing chamber (A), and a further, second housing chamber (B) is provided for receiving an electronic power system, wherein the second housing chamber (B) is arranged in the axial direction (A1) of the first housing chamber (A).

8. Housing (1) according to Claim 5, **characterized in that** the first housing chamber (A) is provided for receiving an electric machine, which first housing chamber has a lateral surface which runs spaced apart around the rotor shaft of the electric machine to be received by the first housing chamber (A), and the further, second housing chamber (B) is provided for receiving an electronic power system, wherein the second housing chamber (B) is arranged on the lateral surface of the first housing chamber (A).

9. Use of a housing (1) according to any one of the preceding claims as a system housing for an electric drive axle of a motor vehicle.

10. Use according to Claim 9, **characterized in that** the electric drive axle is a part of the drive of a hybrid vehicle or a pure electric vehicle.

## Revendications

1. Boîtier (1), en particulier pour un système d'entraînement électrique pour un véhicule, le boîtier (1) étant réalisé comme un boîtier de système avec plusieurs chambres (A, B, C) de boîtier et étant prévu pour recevoir plusieurs composants de système et le boîtier (1) comportant une paroi (11) de boîtier fabriquée avec un outil de coulée et plusieurs interfaces destinées à relier le boîtier (1) à des composants se trouvant à l'extérieur ou à l'intérieur du boîtier (1) étant prévues dans ou sur la paroi (11) de boîtier,
les interfaces comprenant au moins une entrée et/ou une sortie de fluide de refroidissement (KI, KA), au moins un point de fixation (GP) de boîtier pour le boîtier (1) sur d'autres composants, en particulier pour la fixation du boîtier (1) sur le véhicule, au moins un raccord d'enveloppe intérieure (IM) pour la fixation d'une enveloppe intérieure sous la forme d'un cylindre creux, dont la surface extérieure est reliée aux raccords d'enveloppe intérieure (IM), ce qui permet de produire une cavité entre l'enveloppe intérieure et la paroi intérieure de la première chambre A de boîtier, laquelle peut être utilisée pour un écoulement de fluide de refroidissement, à l'intérieur du boîtier (1), en particulier de la première chambre (A) de boîtier, au moins un raccord de couvercle de transmission (GA) pour fixer un couvercle de transmission et au moins un raccord de couvercle de circuit électronique pour fixer un couvercle pour une électronique de puissance, **caractérisé en ce que** les raccords d'enveloppe intérieure (IM) sont formés comme des nervures faisant saillie radialement vers l'intérieur, lesquelles comportent des faces d'appui planes pointant radialement vers l'intérieur.

2. Boîtier (1) selon la revendication 1, **caractérisé en ce que** les interfaces comprennent par ailleurs au moins un point de base (FP) pour la fixation d'un élément sur le boîtier (1) et/ou une zone proéminente de boîtier pour un système de verrouillage de stationnement et/ou pour un élément de découplage et/ou au moins une interface de groupe et/ou au moins un point de fixation enfichable pour la fixation d'un connecteur électrique sur le boîtier (1) et au moins un point de vissage (AW) pour un arbre intermédiaire.

3. Boîtier (1) selon l'une des revendications précédentes, **caractérisé en ce que** le boîtier (1), en particulier la paroi (11) de boîtier, comporte au moins un point de manipulation (HP) qui est prévu comme point de préhension lors de l'usinage du boîtier (1) et/ou lors du montage de composants de système dans le boîtier (1), le point de manipulation (HP) étant disposé dans le boîtier (1) sur une position qui, lorsque les interfaces sont adaptées, reste inchangée en termes de type et de position sur ou dans le boîtier (1) en fonction des exigences de l'utilisateur du boîtier (1).

4. Boîtier (1) selon l'une des revendications précédentes, **caractérisé en ce que** la paroi (11) de boîtier est réalisée en deux ou plusieurs parties.

5. Boîtier (1) selon l'une des revendications précédentes, **caractérisé en ce que** le boîtier (1) comporte plusieurs chambres (A, B, C) de boîtier, qui sont prévues pour recevoir différents composants de système, par exemple une machine électrique, une transmission et une électronique de puissance.

6. Boîtier (1) selon la revendication 5, **caractérisé en ce que** la paroi (11) de boîtier est formée à partir d'un matériau thermoconducteur, ce qui permet de garantir un transfert de chaleur sans entrave entre plusieurs chambres (A, B, C) de boîtier.

7. Boîtier (1) selon la revendication 5, **caractérisé en ce qu'**une première chambre (A) de boîtier est prévue pour recevoir une machine électrique, laquelle comporte une direction axiale (A1) qui est parallèle à l'arbre de rotor de la machine électrique devant être reçue par la première chambre (A) de boîtier et une autre deuxième chambre (B) de boîtier est prévue pour recevoir une électronique de puissance, la deuxième chambre (B) de boîtier étant disposée dans la direction axiale (A1) de la première chambre (A) de boîtier.

8. Boîtier (1) selon la revendication 5, **caractérisé en ce que** la première chambre (A) de boîtier est prévue pour recevoir une machine électrique, qui comporte une face enveloppante, qui s'étend à une certaine distance tout autour de l'arbre de rotor de la machine électrique devant être reçue par la première chambre (A) de boîtier et l'autre deuxième chambre (V) de boîtier est prévue pour recevoir une électronique de puissance, la deuxième chambre (B) de boîtier étant disposée sur la surface enveloppante de la première chambre (A) de boîtier.

9. Utilisation d'un boîtier (1) selon l'une des revendications précédentes en tant que boîtier de système pour un essieu d'entraînement électrique d'un véhicule automobile.

10. Utilisation selon la revendication 9, **caractérisée en ce que** l'essieu d'entraînement électrique fait partie de l'entraînement d'un véhicule hybride ou d'un véhicule électrique pur.
